# EUROPÄISCHE PATENTSCHRIFT

(11) **EP 1 103 749 B1**
(45) Veröffentlichungstag und Bekanntmachung des Hinweises auf die Patenterteilung: **10.09.2003**
(21) Anmeldenummer: 00125087.7
(22) Anmeldetag: 17.11.2000
(51) Int. Cl.: F16K 27/04, E03C 1/04

(54) **Wasserarmatur**
Sanitary fitting
Robinetterie sanitaire

(30) Priorität: 24.11.1999 DE 19956401
(43) Veröffentlichungstag der Anmeldung: 30.05.2001
(73) Patentinhaber: Friedrich Grohe AG & Co. KG, 58675 Hemer (DE)
(72) Erfinder: Kahle, Dieter, 58675 Hemer (DE); Stolle, Eberhard, 58119 Hagen (DE)

(56) Entgegenhaltungen:
- DE-A- 19 810 699
- US-A- 5 361 431
- US-A- 5 983 939

## Beschreibung

Die Erfindung betrifft eine Wasserarmatur, insbesondere Einlochmischbatterie, mit einem Hohlgehäuse, das wenigstens drei im Winkel zueinander angeordnete, jeweils eine Öffnung aufweisende Stutzen hat und das wenigstens ein Einsatzstück mit wenigstens jeweils einem Anschluss für das zufließende Kalt- und/oder Warmwasser für eine Ventilkartusche aufnimmt, wobei zur Befestigung an einer Armaturenbank eines Waschbeckens o.dgl. eine Befestigungsstange vorgesehen ist, die von einer Mutter in einem ersten Stutzen gehalten ist und an dem gegenüberliegenden Stutzen aus dem Hohlgehäuse heraustritt und Befestigungsmittel trägt.

Eine derartige Wasserarmatur ist aus der deutschen Offenlegungsschrift DE 198 10 699 A1 bekannt. Bei dieser Armatur ist ein Hohlgehäuse aus Edelstahl vorgesehen, welches durch Hohlumformung (Hydroform) hergestellt ist. In dem Hohlgehäuse sind wenigstens zwei um 90° zueinander gedreht angeordnete offene Stutzen ausgebildet, durch die jeweils ein Einsatzteil in das Hohlgehäuse einführbar ist. In der Stecklage werden die beiden Einsätze miteinander verschraubt.

Hierdurch werden die beiden Einsätze in der Stecklage im Hohlgehäuse verriegelt, so dass keinerlei Befestigungsmittel für die Einsätze an der Oberfläche des Hohlgehäuses sichtbar werden, wobei andererseits an dem einen Einsatz eine Ventilkartusche befestigbar ist, während an dem anderen Einsatz die erforderlichen Wasserleitungen angeschlossen werden können.
Die beiden Einsätze erfordern jedoch einen relativ großen Materialeinsatz.

Der Erfindung liegt die Aufgabe zugrunde, die im Oberbegriff des Anspruchs 1 angegebene Wasserarmatur weiter zu verbessern.

Diese Aufgabe wird erfindungsgemäß dadurch gelöst, dass die Mutter von einer im Stutzen an einer Schulter mit einer Stirnseite anliegenden Stufenbuchse axial gehalten ist, wobei im Hohlgehäuse ein die Befestigungsstange umfassender Halter für das Einsatzstück vorgesehen ist, der mittels Gewinde von dem in das Hohlgehäuse vorstehenden Endbereich der Stufenbuchse gehalten ist.
Weitere Ausgestaltungen der Erfindung sind in den Ansprüchen 2 bis 11 angegeben.

Mit den vorgeschlagenen Maßnahmen wird insbesondere erreicht, dass als Einsatzstück lediglich eine verhältnismäßig flache Platte vorgesehen werden kann, die mit dem erfindungsgemäßen Halter und der Stufenbuchse in dem Hohlgehäuse fixierbar ist. Hierdurch kann auch die zerspanende Bearbeitung des Hohlgehäuses im wesentlichen auf die Stirnseiten der Stutzen beschränkt werden.
In weiterer Ausgestaltung der Erfindung kann der Halter zweckmäßig mit einem Ringbund in der Einbaulage gegen eine Ringschulter im Hohlgehäuse verspannt werden. An dem Halter können verschiedene Einsatzstücke für den Anschluss einer Mischventilkartusche oder auch einer Absperrventilkartusche befestigt werden, wobei an dem Halter eine Seitenfläche an einem an der Seitenwandung des Ringbunds anschließenden Bogenstücks ausgebildet ist, an der das jeweilige Einsatzstück mit Befestigungsschrauben fixierbar ist.
Vorteilhaft kann einstückig mit dem Halter auch ein Rohrbelüftergehäuse ausgebildet sein, so dass das von der Ventilkartusche abgegebene Wasser über einen Verbindungskanal durch das Einsatzstück einem Rohrbelüfter, um ein unerwünschtes Rücksaugen von Brauchwasser zu verhindern, zugeleitet werden kann. Im Anschluss an den Rohrbelüfter wird dann das abgegebene Wasser über ein am Rohrbelüftergehäuse angeschlossenes Anschlussrohr einem Auslauf zugeführt.

Ausführungsbeispiele der Erfindung sind in der Zeichnung dargestellt und werden im folgenden näher beschrieben. Es zeigt
- Figur 1: eine Wasserarmatur in Form einer Mischbatterie mit Einlochbefestigung im Längsschnitt, installiert an einer zum Teil dargestellten Armaturenbank;
- Figur 2: das in Figur 1 gezeigte Hohlgehäuse mit einem Halter und einem daran befestigten Einsatzstück;
- Figur 3: das in Figur 2 gezeigte Einsatzstück um 90° gedreht;
- Figur 4: das in Figur 2 gezeigte Hohlgehäuse mit dem Halter ohne Einsatzstück;
- Figur 5: den in Figur 4 gezeigten Halter;
- Figur 6: den in Figur 5 gezeigten Halter um 90° gedreht;
- Figur 7: den in Figur 6 gezeigten Halter in Draufsicht;
- Figur 8: die in Figur 4 gezeigte Stufenbuchse;
- Figur 9: eine weitere Wasserarmatur in Form einer Mischbatterie mit Einlochbefestigung im Längsschnitt mit einem am Halter integrierten Rohrbelüfter zur Verhinderung eines Rücksaugens von Brauchwasser über die Mischwasserleitung, installiert an einer zum Teil dargestellten Armaturenbank;
- Figur 10: das in Figur 9 dargestellte Hohlgehäuse mit dem Halter und dem integrierten Rohrbelüftergehäuse sowie dem Einsatzstück;
- Figur 11: das in Figur 10 gezeigte Einsatzstück um 90° gedreht;
- Figur 12: den in Figur 10 dargestellten Halter mit dem Rohrbelüftergehäuse um 90° gedreht;
- Figur 13: den in Figur 10 gezeigten Halter mit dem Rohrbelüfter, teilweise geschnitten;
- Figur 14: den in Figur 12 gezeigten Halter mit dem Rohrbelüftergehäuse, teilweise geschnitten.

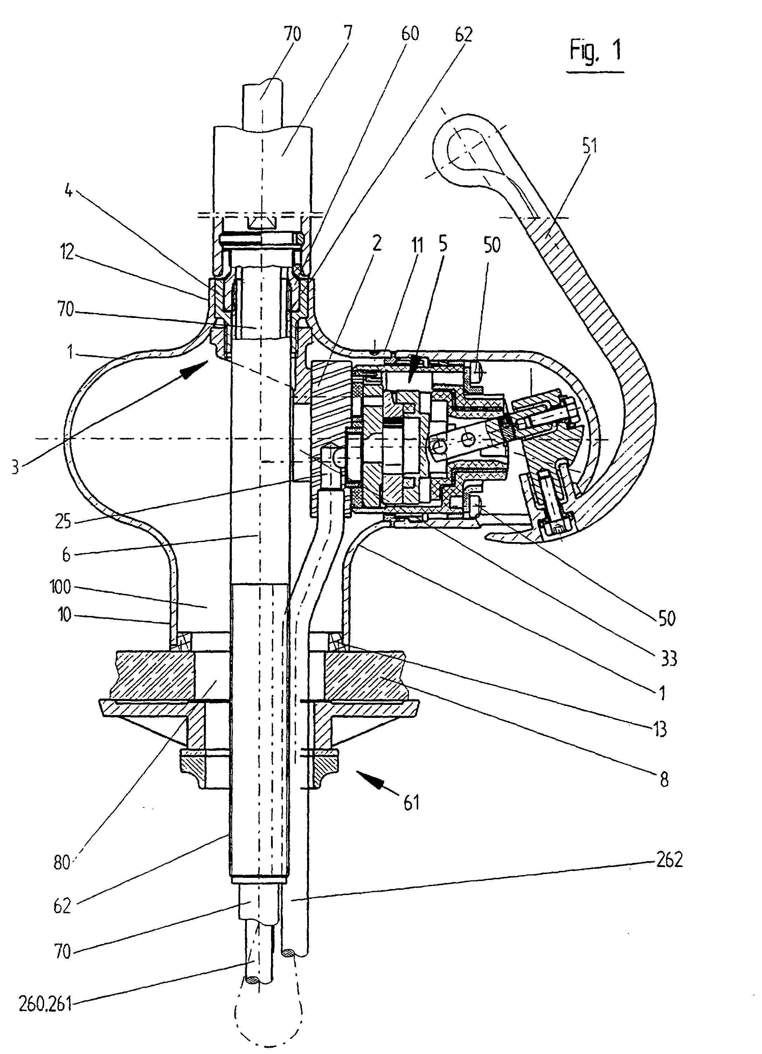

Der Einfachheit halber sind bei den Ausführungsbeispielen in der Zeichnung gleiche oder entsprechende Elemente mit jeweils gleichen Bezugszeichen versehen. Die in Figur 1 gezeigte Wassermischbatterie wird im wesentlichen von einem Hohlgehäuse 1, einem an dem Hohlgehäuse 1 lösbar mit einer Stufenbuchse 4 befestigbaren Halter 3, einem Einsatzstück 2 mit daran angeordneten Anschlussrohren 260,261,262, einer Ventilkartusche 5, einer rohrförmigen Befestigungsstange 6 sowie einem Führungs- und Halterohr 7 mit einer Schlauchleitung 70 gebildet. Die Mischbatterie ist für die Installation auf einer Armaturenbank 8 vorgesehen. Hierbei durchgreift die Befestigungsstange 6 eine Öffnung 80 in der Armaturenbank 8, so dass von der Unterseite der Armaturenbank 8 auf der Befestigungsstange 6 eine bekannte Spanneinrichtung 61 aufgebracht werden kann.
Das Hohlgehäuse 1 ist aus Edelstahl durch Hohlumformung (Hydroform) hergestellt. Es weist in etwa einer Ebene drei Stutzen 10,11,12 auf, die jeweils eine Öffnung 100,110,120 haben. Der Stutzen 10 ist als Standsockel ausgebildet und stützt sich mit seiner Stirnseite an einem auf der Oberfläche der Armaturenbank 8 aufliegenden Ring 13 ab. Der Stutzen 11 ist um 90° gedreht zu dem Stutzen 10 in dem Hohlgehäuse 1 ausgebildet, während der Stutzen 12 etwa koaxial zum Stutzen 10 in dem Hohlgehäuse 1 vorgesehen ist.

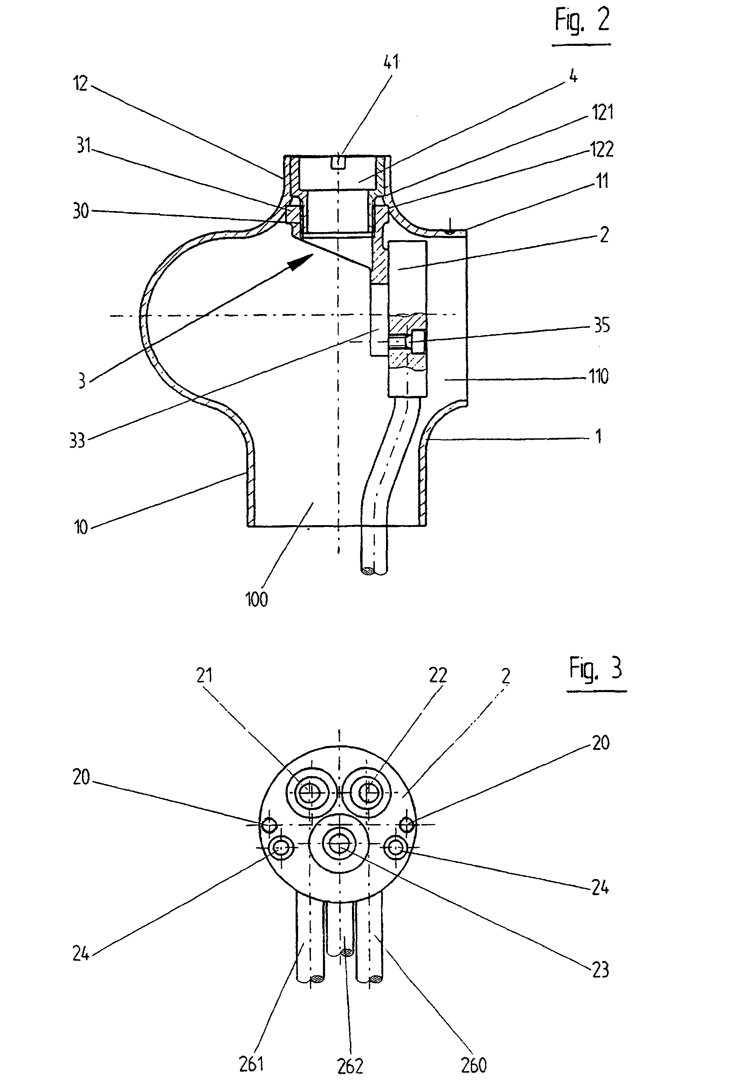

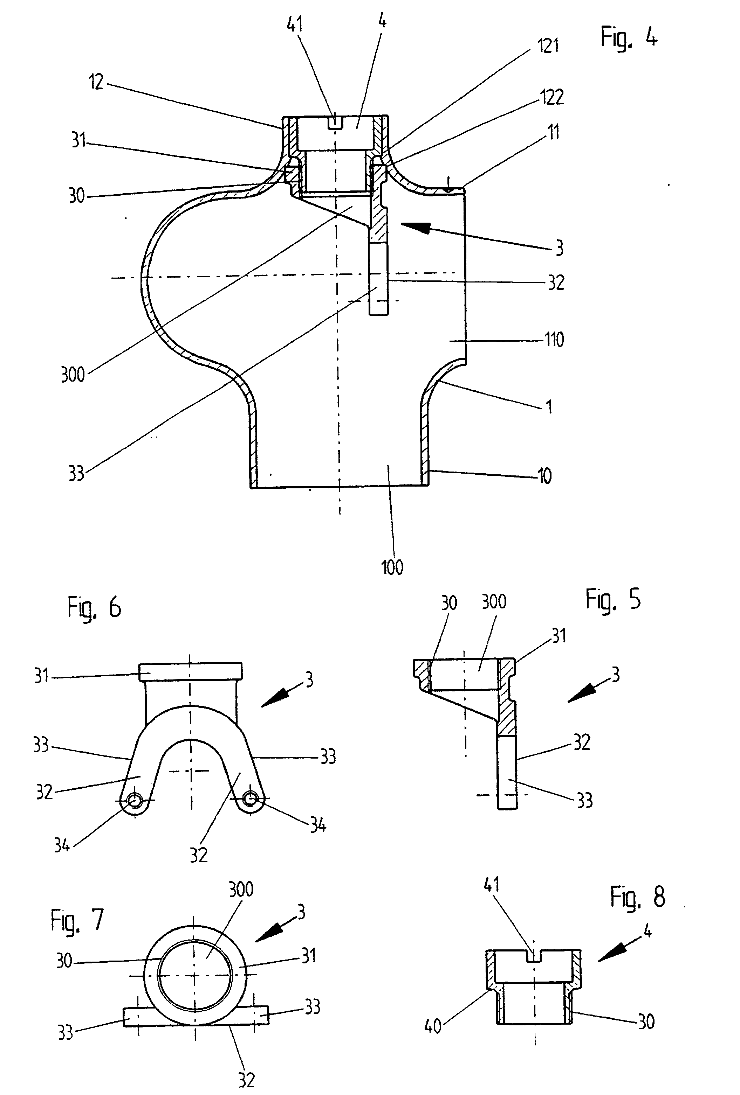

Der Halter 3 ist, wie es insbesondere aus Figur 4 der Zeichnung ersichtlich ist, im Bereich des Stutzens 12 mit einer Stufenbuchse 4 befestigt und weist eine Durchgangsbohrung 300 für die Befestigungsstange 6 auf. Die Stufenbuchse 4 liegt hierbei axial mit ihrer mittleren Stirnseite 40 an einer Ringschulter 121 im Stutzen 12 an, wobei an dem verjüngten Bereich der Stufenbuchse 4 ein Gewinde 30 ausgebildet ist, welches in das Innere des Hohlgehäuses 1 vorsteht. Der Halter 3 ist hierbei mit einem Ringbund 31 versehen, in dessen Innenwandung ein entsprechendes Gewinde 30 ausgebildet ist. Im Hohlgehäuse 1 ist im Bereich des Stutzens 12 eine weitere Ringschulter 122 ausgebildet, gegen die der Ringbund 31 beim Einschrauben der Stufenbuchse 4 verspannt wird. Zum Ansatz eines Drehwerkzeugs ist an der äußeren Stirnseite der Stufenbuchse 4 ein Schlitz 41 ausgebildet.
Der Halter 3 ist am Außenbereich des Ringbunds 31 mit einem parallel zur Durchgangsbohrung 300 verlaufenden Bogenstück 33 versehen, wie es insbesondere aus Figur 6 der Zeichnung ersichtlich ist. Das Bogenstück 33 bildet eine Seitenfläche 32, an der das Einsatzstück 2 angelagert wird. Zur Fixierung des Einsatzstücks 2 an der Seitenfläche 32 ist in dem Bogenstück 33 an dem jeweiligen Endbereich jeweils eine Gewindebohrung 34 vorgesehen, in die eine Befestigungsschraube 35 eindrehbar ist, wie es insbesondere aus Figur 2 der Zeichnung zu entnehmen ist.

Das Einsatzstück 2 ist als flache, kreisförmige Platte ausgebildet. Das Einsatzstück 2, der Halter 3 und die Stufenbuchse 4 sind aus Metall, vorzugsweise Messing, hergestellt.
Das Einsatzstück 2 wird nach dem Befestigen an dem Halter 3 koaxial zur Öffnung 110 des Stutzens 11 gehalten und trägt an der vom Halter 3 abgekehrten Stirnseite ein Anschlusslochbild, wie es für Ventilkartuschen 5 mit Mischventilausbildung bekannt ist. Wie es insbesondere aus Figur 3 der Zeichnung ersichtlich ist, ist hierbei eine Anschlussöffnung 21 für den Kaltwasserzufluss und eine Anschlussöffnung 22 für den Warmwasserzufluss ausgebildet. Darüber hinaus ist eine Anschlussöffnung 23 für den Mischwasserabfluss von der Ventilkartusche 5 angeordnet. Außerdem sind zwei Gewindebohrungen 20 für zwei Spannschrauben 50 der Ventilkartusche 5 vorgesehen. Mit Hilfe der Spannschrauben 50 und unter Zwischenlage von Dichtringen im Bereich der Anschlussöffnungen 21,22,23 am Einsatzstück 2 kann somit die Ventilkartusche 5 verspannt werden. In der Ventilkartusche 5 ist ein bekanntes Misch- und Mengenregulierventil angeordnet, bei dem mit einem Handhebel 51 in einem ersten Freiheitsgrad durch ein Verschwenken um die Mittelachse des Stutzens 11 das Mischungsverhältnis von Kalt- und Warmwasser und durch ein Verschwenken um eine Achse senkrecht zur Mittelachse des Stutzens 11 die Gesamtausflussmenge einstellbar ist.

In dem Einsatzstück 2 sind von der Mantelfläche ausgehend Bohrungen 25 ausgebildet, die jeweils mit einer Anschlussöffnung 21,22,23 verbunden sind. In diesen Bohrungen 25 ist jeweils ein aus Kupfer hergestelltes Anschlussrohr 260,261,262 eingelötet. In der Einbaulage des Einsatzstücks 2 treten sie durch die Öffnung 100 des Hohlgehäuses 1 und durch die Öffnung 80 in einen Raum unterhalb der Armaturenbank 8 ein. Die Anschlussrohre 260 und 261 können hier an das Kaltwasser- bzw. an das Warmwasserversorgungsleitungsnetz angeschlossen werden. An dem Anschlussrohr 262 ist dagegen eine Schlauchleitung 70 angeschlossen, die am anderen Endbereich mit einem Auslaufmundstück verbunden ist (in der Zeichnung nicht dargestellt).

In der Stufenbuchse 4 ist eine Mutter 60 drehbar, aber axial festliegend angeordnet. In der Mutter 60 ist die rohrförmige Befestigungsstange 6 eingeschraubt. Hierbei durchgreift die Befestigungsstange 6 das Hohlgehause 1 und die Öffnung 80 in der Armaturenbank 8. Am unteren Endbereich der Befestigungsstange 6 ist ein entsprechendes Außengewinde 62 vorgesehen, auf dem eine bekannte Spanneinrichtung 61 aufschraubbar ist, so dass die gesamte Mischbatterie auf der Armaturenbank 8 befestigt werden kann.
Die mit dem Anschlussrohr 262 verbundene Schlauchleitung 70 ist durch die rohrförmige Befestigungsstange 6 hindurchgeführt und gelangt im Bereich der Mutter 60 in das verschwenkbar gehalterte Führungs- und Halterohr 7, von dem die Schlauchleitung mit einem am Endbereich ausgebildeten Auslaufmundstück herausziehbar gehalten ist.

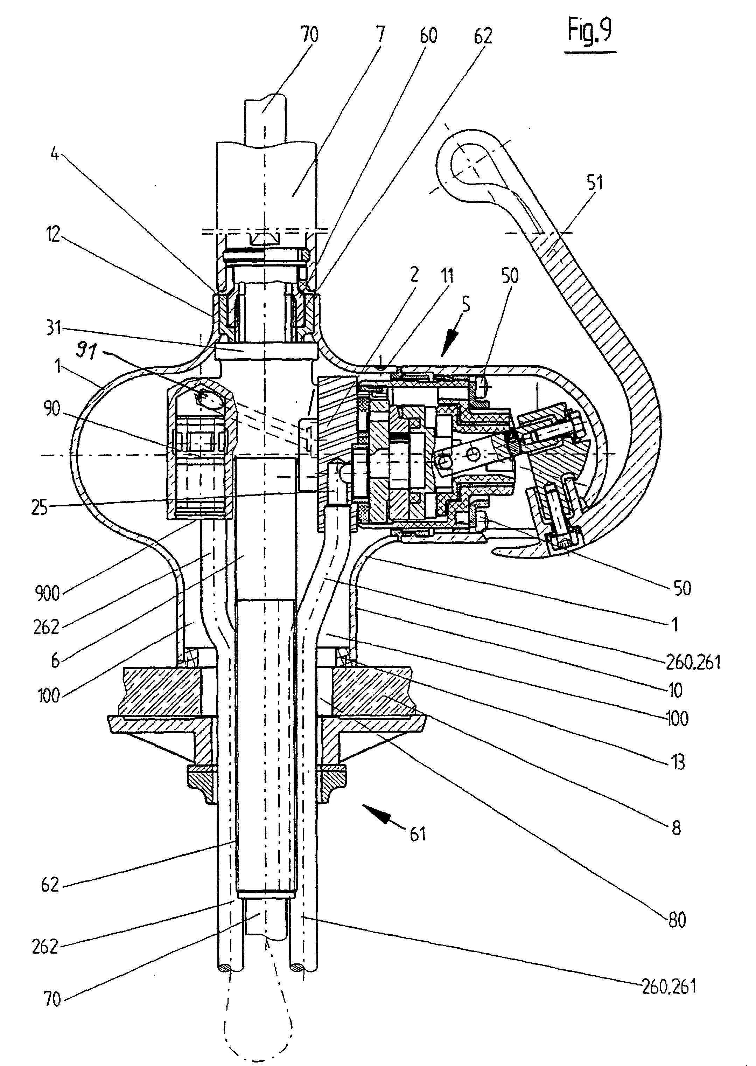

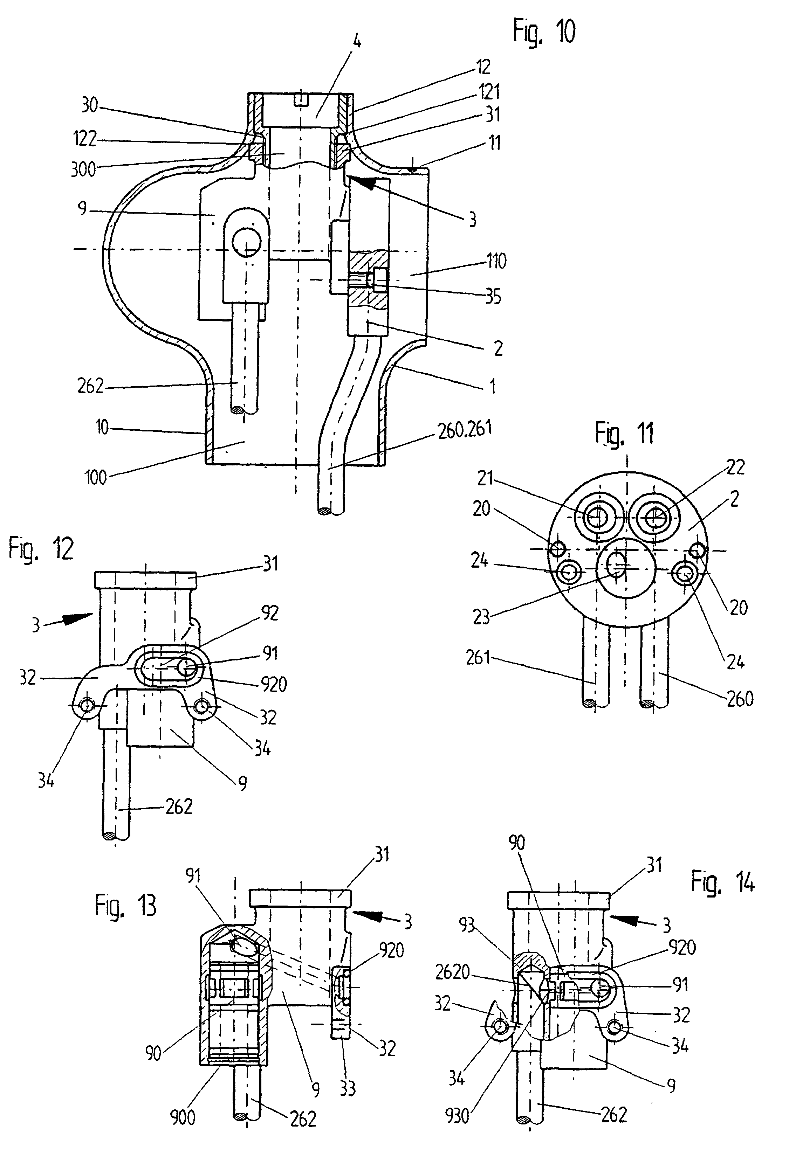

Bei dem in Figur 9 gezeigten Ausführungsbeispiel einer Mischbatterie ist zusätzlich zu dem vorstehend beschriebenen Ausführungsbeispiel ein Rohrbelüfter 90 im Mischwasserbereich eingesetzt, so dass ein Rücksaugen von Brauchwasser über die Schlauchleitung 70 ausgeschlossen ist. Hierfür ist ein modifizierter Halter 3 mit einem entsprechend angepassten Einsatzstück 2 vorgesehen.
Der Halter 3 ist hierbei einstückig mit einem Rohrbelüftergehäuse 9 ausgebildet, wie es insbesondere aus Figur 12 bis 14 der Zeichnung ersichtlich ist. Bei dem modifizierten Einsatzstück 2 ist jeweils in einer der Bohrungen 25 in der Mantelfläche eines der beiden Anschlussrohre 260,261 für Kaltwasser und Warmwasser eingelötet. Die Anschlussöffnung 23 für Mischwasser ist dagegen durch das Einsatzstück 2 hindurchgeführt und mündet in einer Einsenkung 92 des Rohrbelüftergehäuses 9. Außerdem sind in dem Einsatzstück 2 zwei Bohrungen 24 für die Befestigungsschrauben 35 ausgebildet.
Die Einsenkung 92 ist im Bereich der Seitenfläche 32 des Bogenstücks 33 ausgebildet, welche in einen Kanal 91 mündet, der das Mischwasser einem bekannten Rohrbelüfter 90 koaxial zuführt. Das Mischwasser tritt danach radial aus dem Rohrbelüfter 90 aus und gelangt über eine Verbindungsbohrung 930 in eine Anschlussbohrung 93 für Mischwasser, in der das Anschlussrohr 262 eingelötet ist.
Der Rohrbelüfter 90 ist dabei über eine Öffnung 900 mit der Atmosphäre verbunden. Damit die Bohrung 930 nach außen verschlossen ist, ist das Anschlussrohr 262 mit einer geschrägten Stirnseite 2620 eingelötet, wie es insbesondere aus Figur 14 der Zeichnung zu entnehmen ist. Zur Abdichtung der Einsenkung 92 zur Stirnfläche des Einsatzstückes 2 ist eine O-Ringdichtung 920 vorgesehen.
Im übrigen entspricht die Mischbatterie dem in Figur 1 bis 8 beschriebenen Ausführungsbeispiel.

## Patentansprüche

1. Wasserarmatur, insbesondere Einlochmischbatterie, mit einem Hohlgehäuse (1), das wenigstens drei im Winkel zueinander angeordnete, jeweils eine Öffnung aufweisende Stutzen (10,11,12) hat und das wenigstens ein Einsatzstück (2) mit wenigstens jeweils einem Anschluss für das zufließende Kalt- und/oder Warmwasser für eine Ventilkartusche (5) aufnimmt, wobei zur Befestigung an einer Armaturenbank (8) eines Waschbeckens od.dgl. eine Befestigungsstange (6) vorgesehen ist, die von einer Mutter (60) in einem ersten Stutzen (12) gehalten ist und an dem gegenüberliegenden Stutzen (10) aus dem Hohlgehäuse (1) heraustritt und Befestigungsmittel trägt, **dadurch gekennzeichnet, dass** die Mutter (60) von einer im Stutzen (12) an einer Schulter (121) mit einer Stirnseite (40) anliegenden Stufenbuchse (4) axial gehalten ist, wobei im Hohlgehäuse (1) ein die Befestigungsstange (6) umfassender Halter (3) für das Einsatzteil (2) vorgesehen ist, der mittels Gewinde (30) von dem in das Hohlgehäuse (1) vorstehenden Endbereich der Stufenbuchse (4) gehalten ist.

2. Wasserarmatur nach Anspruch 1, **dadurch gekennzeichnet, dass** der Halter (3) mit einem Ringbund (31) von der Stufenbuchse (4) gegen eine innere Ringschulter (122) im Hohlgehäuse (1) verspannt ist.

3. Wasserarmatur nach Anspruch 1 oder 2, **dadurch gekennzeichnet, dass** der Halter (3) eine Seitenfläche (32) aufweist, an der das Einsatzstück (2) befestigbar ist.

4. Wasserarmatur nach Anspruch 3, **dadurch gekennzeichnet, dass** die Seitenfläche (32) an einem etwa V-förmig gestalteten, einstückig mit dem Ringbund (31) ausgebildeten Bogenstück (33) angeordnet ist, wobei an den beiden Endbereichen des Bogenstücks (33) jeweils eine Gewindebohrung (34) vorgesehen ist, in die eine Befestigungsschraube (35) des Einsatzstücks (2) eindrehbar ist.

5. Wasserarmatur nach Anspruch 3, **dadurch gekennzeichnet, dass** der Halter (3) mit der Seitenfläche (32), dem Ringbund (31) und dem Gewinde (30) mit einem Rohrbelüftergehäuse (9) einstückig ausgebildet ist.

6. Wasserarmatur nach wenigstens einem der vorhergehenden Ansprüche, **dadurch gekennzeichnet, dass** das Einsatzstück (2) als relativ dünne kreisförmige Platte ausgebildet ist, deren in der Öffnung (110) angeordnete Stirnseite eine Anschlussöffnung (21) für Kaltwasser, eine Anschlussöffnung (22) für Warmwasser und eine Anschlussöffnung (23) für Mischwasser aufweist, wobei an der Stirnseite mittels Gewindebohrungen (20) und Spannschrauben (50) eine Ventilkartusche (5), in der ein Misch- und Mengenregulierventil ausgebildet ist, anschließbar ist.

7. Wasserarmatur nach Anspruch 6, **dadurch gekennzeichnet, dass** die Anschlussöffnungen (21,22,23) mit von der Mantelseite des Einsatzstücks (2) eingebrachte Bohrungen (25) in Verbindung stehen, wobei die Bohrungen (25) jeweils mit einem Anschlussrohr (260,261,262) verbunden sind.

8. Wasserarmatur nach Anspruch 6, **dadurch gekennzeichnet, dass** die Anschlussöffnungen (260,262) für Kalt- und Warmwasser mit an der Mantelseite des Einsatzstücks (2) eingebrachte Bohrungen (25) in Verbindung stehen, die andererseits mit jeweils einem Anschlussrohr (260,261) verbunden sind, während die Anschlussöffnung (262) für Mischwasser mit einem Kanal (91) in dem Rohrbelüftergehäuse (9) verbunden ist, an dessen Ausgang ein Anschlussrohr (262) für Mischwasser angeschlossen ist.

9. Wasserarmatur nach Anspruch 8, **dadurch gekennzeichnet, dass** in dem Einsatzstück (2) Bohrungen (24) für Befestigungsschrauben (35) ausgebildet sind, die in Gewindebohrungen (34) an der Seitenfläche (32) des Halters (3) am Rohrbelüftergehäuse (9) einschraubbar sind, wobei in der Seitenfläche (32) des Halters (3) eine Einsenkung (92) für die Einmündung der Anschlussöffnung (23) für Mischwasser eingebracht ist, an deren Wandung ein O-Ring (920) zur Abdichtung nach außen vorgesehen ist.

10. Wasserarmatur nach wenigstens einem der vorhergehenden Ansprüche, **dadurch gekennzeichnet, dass** das Rohrbelüftergehäuse (9) und/oder der Halter (3) mit der Stufenbuchse (4) aus Metall, vorzugsweise aus Messing, hergestellt ist.

11. Wasserarmatur nach wenigstens einem der vorhergehenden Ansprüche, **dadurch gekennzeichnet, dass** an der Stirnseite des als Standsockel dienenden Stutzens (10) ein Ring (13), vorzugsweise aus Kunststoff, als Übergang zur Armaturenbank (8) vorgesehen ist.

## Claims

1. Water fitting, especially a pillar mixer tap, having a hollow housing (1), which has at least three connectors (10, 11, 12) arranged at an angle to one another and each having an opening and which receives at least one insert piece (20) having at least one respective connection for the inflowing cold and/or hot water for a valve cartridge (5), wherein, for fixing to a fitting support surface (8) of a wash basin or the like there is provided a fixing rod (6), which is held by a nut (60) in a first connector (12) and at the opposite connector (10) emerges from the hollow housing (1) and carries fixing means, **characterised in that** the nut (60) is held axially by a stepped bushing (4) lying in the connector (12) with an end face (40) against a shoulder (121), wherein a holder (3) for the insert part (2), which holder surrounds the fixing rod (6), is provided in the hollow housing (1) and is held by means of a thread (30) by the end portion of the stepped bushing (4) projecting into the hollow housing (1).

2. Water fitting according to claim 1, **characterised in that** the holder (3) is clamped with an annular collar (31) by the stepped bushing (4) against an inner annular shoulder (122) in the hollow housing (1).

3. Water fitting according to claim 1 or 2, **characterised in that** the holder (3) has a lateral face (32) against which the insert piece (2) can be fastened.

4. Water fitting according to claim 3, **characterised in that** the lateral face (32) is arranged on a segment curved approximately in a V-shape integrally constructed with the annular collar (31), wherein a threaded bore (34) is provided at each of the two end portions of the curved segment (33), into which a fixing screw (35) of the insert piece (2) can be screwed.

5. Water fitting according to claim 3, **characterised in that** the holder (3) with the lateral face (32), the annular collar (31) and the thread (30) is integrally constructed with a pipe air-release housing (9).

6. Water fitting according to at least one of the preceding claims, **characterised in that** the insert piece (2) is in the form of a relatively thin circular plate, the end face of which arranged in the opening (110) has a connection opening (21) for cold water, a connection opening (22) for hot water and a connection opening (23) for mixed water, wherein a valve cartridge (5), in which a mix-controlling and volume-controlling valve is constructed; is attachable to the end face by means of threaded bores (20) and clamping screws (50).

7. Water fitting according to claim 6, **characterised in that** the connection openings (21, 22, 23) are in communication with bores (25) formed from the outer side of the insert piece (2), the bores (25) being connected to a respective connection pipe (260, 261, 262).

8. Water fitting according to claim 6, **characterised in that** the connection openings (260, 262) for cold and hot water are in communication with bores (25) made at the outside of the insert piece (2), which bores at the other side are connected to a respective connection pipe (260, 261), whilst the connection opening (262) for mixed water is connected to a channel (91) in the pipe air-release housing (9), to the outlet of which a connection pipe (262) for mixed water is attached.

9. Water fitting according to claim 8, **characterised in that** in the insert piece (2) there are formed bores (24) for fixing screws (35), which can be screwed into threaded bores (34) on the lateral face (32) of the holder (3) to the pipe air-release housing (9), wherein in the lateral face (32) of the holder (3) there is a recess (92) into which the connection opening (23) for mixed water can open, an O-ring (920) being provided on the wall of the recess to provide a seal with respect to the outside.

10. Water fitting according to at least one of the preceding claims, **characterised in that** the pipe air-release housing (9) and/or the holder (3) with the stepped bushing (4) are made from metal, preferably from brass.

11. Water fitting according to at least one of the preceding claims, **characterised in that** a ring (13), preferably of plastics material, is provided on the end of the connector (10) serving as standing base, the ring being used as transition to the fitting support surface (8).

## Revendications

1. Robinet à eau, en particulier mélangeur à un orifice comportant un boîtier creux (1) qui possède au moins trois tubulures (10, 11, 12) présentant respectivement une ouverture, disposées en angle l'une par rapport à l'autre, et qui supporte au moins une pièce intercalaire (2), ayant au moins un raccordement respectivement pour l'eau froide et/ou chaude arrivant, pour une cartouche de vanne (5), dans lequel pour la fixation à un banc de robinetterie (8) d'un lavabo ou similaire, une tige de fixation (6) est maintenue par un écrou (60) dans une première tubulure (12) et, sur la tubulure (10) à l'opposé, sort du boîtier creux (1) et porte des moyens de fixation,
**caractérisé en ce que**
l'écrou (60) est maintenu axialement par un manchon étage (4) appuyé dans la tubulure (12) sur un épaulement (121) ayant une face frontale (40) avec, dans le boîtier creux (1), un support (3) entourant la tige de fixation (6), pour la pièce intercalaire (2), et maintenu au moyen d'un filet (30) par la zone d'extrémité, faisant saillie dans le boîtier creux (1), du manchon étagé (4).

2. Robinet à eau selon la revendication 1,
**caractérisé en ce que**
le support (3) est serré au moyen d'un collet circulaire (31) par le manchon étage (4) contre un épaulement circulaire intérieur (122) dans le boîtier creux (1).

3. Robinet à eau selon la revendication 1 ou 2,
**caractérisé en ce que**
le support (3) présente une surface latérale (32) sur laquelle la pièce intercalaire (2) peut être fixée.

4. Robinet à eau selon la revendication 3,
**caractérisé en ce que**
la surface latérale (32) est disposée sur une pièce cintrée (33) conçue en forme de V, formée d'un seul tenant avec le collet circulaire (31), avec sur les deux zones d'extrémité de la pièce cintrée (33) un taraudage (34) dans lequel une vis de fixation (35) de la pièce intercalaire (2) peut être vissée.

5. Robinet à eau selon la revendication 3,
**caractérisé en ce que**
le support (3) est, avec la surface latérale (32), le collet circulaire (31) et le filet (30), formé d'un seul tenant avec le boîtier d'aérateur pour tube (9).

6. Robinet à eau selon au moins une des revendications précédentes,
**caractérisé en ce que**
la pièce intercalaire (2) est formée comme une plaque de forme circulaire relativement mince, dont la face frontale disposée dans l'ouverture (110) présente une ouverture de raccordement (21) pour eau froide, une ouverture de raccordement (22) pour eau chaude et une ouverture de raccordement (23) pour eau mélangée, et une cartouche de vanne (5), dans laquelle une soupape de réglage de mélange et de quantité est formée, peut être raccordée sur la face frontale au moyen de taraudages (20) et de vis de serrage (50).

7. Robinet à eau selon la revendication 6, **caractérisé en ce que** les ouvertures de raccordement (21, 22, 23) sont en liaison avec des perçages (25) réalisés depuis la face externe de la pièce intercalaire (2), les perçages (25) étant reliés respectivement avec chaque fois un tube de raccordement (260, 261, 262).

8. Robinet à eau selon la revendication 6,
**caractérisé en ce que**
les ouvertures de raccordement (260, 262) pour eau froide et chaude sont en liaison avec des perçages (25) réalisés sur la face externe de la pièce intercalaire (2) qui, d'autre part, sont reliés respectivement avec un tube de raccordement (260, 261), tandis que l'ouverture de raccordement (262) pour eau mélangée est reliée avec un canal (91) dans le boîtier d'aérateur pour tube (9), à la sortie duquel un tube de raccordement (262) pour eau mélangée est raccordé.

9. Robinet à eau selon la revendication 8,
**caractérisé en ce que**
dans la pièce intercalaire (2), sont formés des perçages (24) pour vis de fixation (35) qui peuvent être vissés dans les taraudages (34) sur la surface latérale (32) du support (3) sur le boîtier d'aérateur pour tube (9), et dans la surface latérale (32) du support (3), est formée une empreinte (92) pour l'embouchure de l'ouverture de raccordement (23) pour eau mélangée, sur la paroi de laquelle est prévu un joint torique (920) pour l'étanchéité vers l'extérieur.

10. Robinet à eau selon au moins l'une des revendications précédentes,
**caractérisé en ce que**
le boîtier d'aérateur pour tube (9) et/ou le support (3) avec le manchon étagé (4) sont fabriqués en métal, de préférence en laiton.

11. Robinet à eau selon au moins l'une des revendications précédentes,
**caractérisé en ce que**
sur la face frontale de la tubulure (10) servant de socle d'appui, une bague (13), de préférence en matière plastique, forme une transition vers le banc de robinetterie (8).
